# EUROPEAN PATENT APPLICATION

(11) **EP 1 308 897 A1**
(43) Date of publication of application: **07.05.2003**
(21) Application number: 02396160.0
(22) Date of filing: 29.10.2002
(51) Int. Cl.: G06T 7/20, H04N 5/14, H04N 7/36, H04N 7/26

(54) **Image interpolation**

(30) Priority: 01.11.2001 FI 20012115
(71) Applicant: Oplayo Oy, 00180 Helsinki (FI)
(72) Inventor: Kesäniemi, Martti, 00530 Helsinki (FI)
(74) Representative: Savela, Antti-Jussi

(57) **Abstract**

This invention relates to the techniques of interpolation of images using at least two original images. Especially, the invention concerns motion compensation and finding desired color information of the picture. Only one vector field of the motion vectors between original pictures is required for forming any intermediate picture. When knowing the desired intermediate picture beforehand, it is possible to adjust parameter values of the motion vectors of the vector field for forming the intermediate picture. By adjusting the parameter values, nonlinear motion and color information can be taken into account.

## Description

### Field of the Invention

This invention relates to the techniques of interpolation of images using at least two original images. Especially, the invention concerns motion compensation and finding desired color information of the picture.

### Background of the Invention

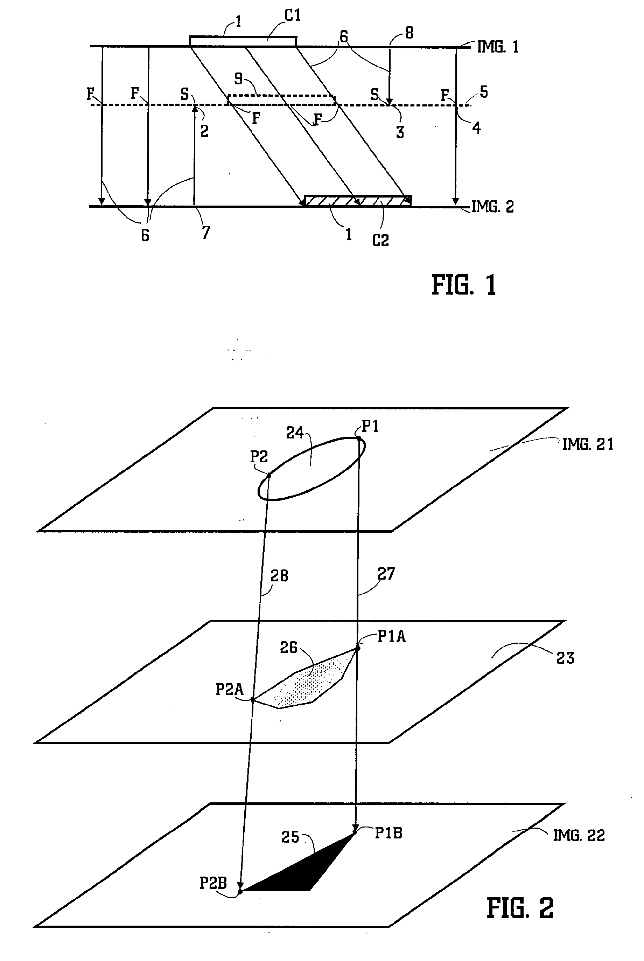

FIG. **1** represents a simplified example of a known interpolation technique. Original images, **IMG. 1** and **IMG. 2,** are used when interpolating a new image **5** between them. Motion vectors **6** are formed from one of the original pictures to the other one. The interpolating image **5** is formed using the motion vectors by interpolating pixel values **F** of the interpolating image from the values of the motion vectors on the original pictures.

However, if there exists a moving object in the original pictures, there are no companion pixels for all the pixels of one of the original images in the other original image. In FIG. **1** an object **1** is moving right. When it is moving, new pixels **7** are coming to the front from the background in **IMG. 2.** On the other hand, the moving object covers the pixels in **IMG.2,** which would have the companion pixels **8** in **IMG. 1.** Since all the pixels do not have companions in the original images, some pixels **S** in the interpolating image must be tracked by forming motion vectors from one of the original images to the interpolating image. As shown in FIG. **1**, part of the pixels **4** in image **5** are formed using the motion vectors between the original images, the other part of the pixels **3** are formed using the motion vectors between the first original image **IMG. 1** and the interpolating image **5**, and further the other part of the pixels **2** are formed using the motion vectors between the second original image **IMG. 2** and the interpolating image **5**.

The pixel values in both the original images contain color information. In FIG. **1**, object **1** has a certain color **C1** in the first image and another color **C2** in the second image. The object **9**, which is formed in the interpolated image **5**, has a color that is a combination of the colors of the object in the original images.

The problem with the most commonly known solutions is that forming an intermediate image, the motion vectors must be fixed to the intermediate image: in other words, each intermediate picture needs motion vectors, which are specific for it. Another problem is that the interpolation process is linear, and due to this the formed image is linear interpolation from the original images. However; the motion information between the original images may contain nonlinear parts, which cannot be tracked by using the known interpolation techniques. For example, the motion of objects between two pictures may be such that it is impossible to track naturally using the known interpolation techniques. The goal of this invention is to eliminate the drawback concerning non-linearity of the known solutions preferably using a solution, which alleviate the first problem mentioned above. This is achieved in a way described in the claims.

### Summary of the Invention

The invention is based primarily on two ideas, or insights. The first insight, which is well established in the art, and supports efficient use of the invention is that only one vector field of the motion vectors between original pictures is required for forming any intermediate picture. The first insight is needed for a preferable implementation of the invention, but however the invention works with any vector field. The second insight is that when the desired intermediate picture is known beforehand, it is possible to adjust parameter values related to the forming of the intermediate picture. By adjusting the parameter values, nonlinear motion and color information can be taken into account.

The first parameter value that is to be adjusted describes the timeline position of the intermediate picture. (more precisely the timeline position of a pixel or a group of pixels of the intermediate picture). (Pictures, such as video frames are normally situated on a time axis in presentation order). This parameter is called the shape parameter, because it affects mostly the shape of the objects in the intermediate image - in other words motion between the original pictures is compensated for. The second parameter describes the source of the color information used when creating the intermediate frame; in practice, both original frames are used as the source of the color information, so the second parameter is the weight used in calculating the color of the intermediate frame to be created

When adjusting the shape and color parameters -the parameter value pair - related to the whole image or to a restricted area of the image, search of the best parameter values can be done simultaneously for both shape and color using e.g. a logarithmic search algorithm. Furthermore, for adjusting the parameter values additional adjusting parameters can be used. The invention makes it possible to encode, for example, videos in a very efficient and accurate way.

### Brief Description of the Drawings

In the following the invention is described in more detail by means of FIGs **1 - 5** in the attached drawings where:
- FIG. **1**: illustrates a simplified example of a known interpolation technique,
- FIG. **2**: illustrates an example of how an intermediate image is formed by using the inventive arrangement,
- FIG. 3: illustrates an example of different possibilities when adjusting the shape and color parameters for the desired image,
- FIG. **4**: illustrates an example of a flow chart representing the inventive method,
- FIG. **5**: shows an example of an encoder/decoder arrangement according to the invention,
- FIG. **6**: shows an example of a motion vector in a vector field.

### Detailed Description of the Invention

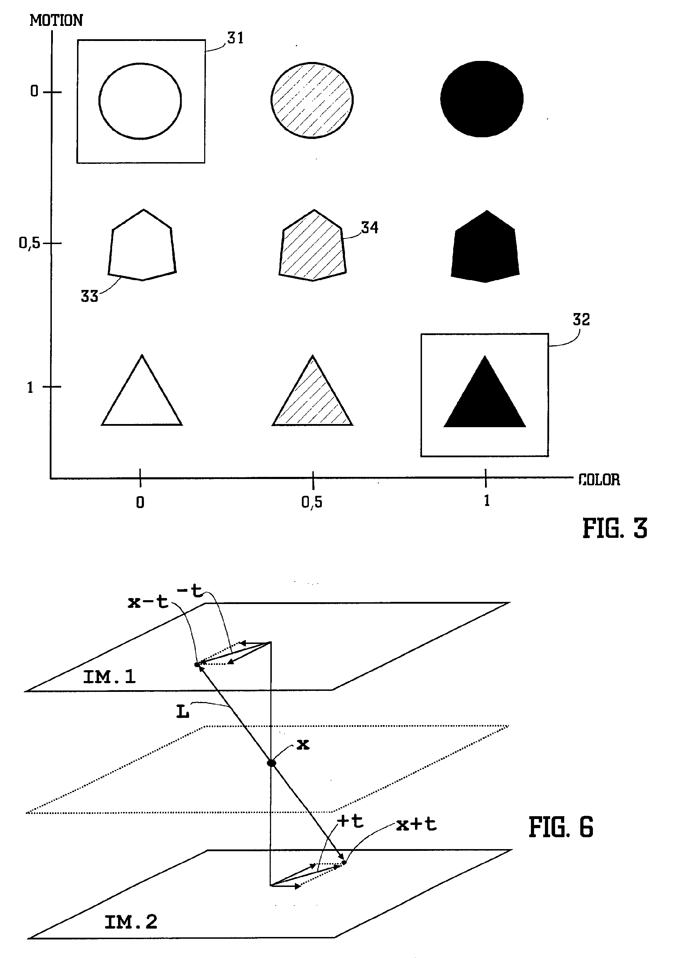

FIG. **2** illustrates an example of how an intermediate image is formed by using the inventive arrangement. The vector field, which is formed between original pictures **IMG. 21** and **IMG. 22** is that kind of a vector field, which singularly defines a desired interpolated picture **23**. In a singular vector field, each point in an intermediate image has one and only one corresponding point in both original pictures. Thus the motion vectors in the singular vector field do not cross each other. This kind of vector field can be achieved, for example, in a way described in the inventor's other patent application WO 01/48695 A1. Since the singular vector field is described in this published document, the vector field or the motion vectors are not described in detail in this text.

The first picture **IMG. 21** contains an object of a circle **24**. The second picture **IMG. 22** contains an object of a triangle **25**. The transformation of the object from the circle to the triangle represents a motion between the original pictures. The picture **23**, which is interpolated, contains an object **26** that is an intermediate form from the circle and the triangle. The intermediate form, which is known beforehand, is achieved using motion vectors, which have companion points, ie. pixel values, in the circle in **IMG. 21,** and in the triangle in **IMG. 22**. In this context, knowing the intermediate form beforehand means that the image that the intermediate image is going to present exists in reality, or the intermediate image is a new image that the user wants to form. For example, when intermediate pictures are encoded using interpolation, or when a new image is edited from two pictures. Pixel **P1** in the circle has a companion pixel **P1B** in the triangle. Pixel **P1A** in the intermediate object **26** is a result of the interpolation from pixels **P1** and **P1B.** Motion vector **27** connects these pixels. Pixel **P2** in the circle has a companion pixel **P2B** in the triangle. Pixel **P2A** in the intermediate object **26** is a result of the interpolation from pixels **P2** and **P2B.** Motion vector **28** connects these pixels. In a similar way, all the motion vectors, which go through the object, are used for the interpolation of the desired object **26**. However, when interpolating the pixels of the intermediate image, the direct interpolation may not achieve the required accuracy, especially if the intermediate image contains nonlinear information as compared to the original images. Thus the values of the interpolation parameters values must be adjusted.

If the singular motion vector described in the inventor's PCT application WO 01/48695 A1 is used, the motion vector **L**, see FIG. **6**, attached to the point **x** combines the points *g*_{*1*}(**x-t**(x)) (Compare **P1** in Fig. **2**) in the first, and *g*_{*2*}(**x+t**(x)) (Compare **P1B** in Fig. **2**) in the second original image. It is convenient to think about a situation where the attaching point x is on the level (timeline position) of the intermediate image, but the x can also be on another level between the original images. Here, the pixel values of the original images are *g*_{*1*} and *g*_{*2*}, and the movement related to the vector attached in point **x** is **t**(x), These points are used to form an image point *g*_{*c*}(**x**+*c***t**(x)) (Compare **P1A** in Fig. **2**) in the intermediate image: the parameter c that in general gets values from -1 to 1 describes the shape of the objects in the intermediate image. If *c*=-1, the shape information is the same in images *g*_{*c*} and *g*_{*1*}, (i.e. in Fig. **2** object **24** equals with object **26**) and with value *c*=1 the shape information of *g*_{*c*} is the same as the one of *g*_{*2*}. (i.e. in Fig. **2** object **25** equals with object **26**).

The color of the point *g*_{*c*}(**x**+*c***t**(x)) (**P1A** in Fig. **2**) can be determined as a weighted sum of points *g*_{*1*}(**x**-**t**(x)) (**P1** in Fig. **2**) and *g*_{*2*}(**x**+**t**(x)) (**P1B** in Fig. **2**), i.e., *g*_{*c*}(**x**+*c***t**(x)) = (1-*w*)*g*_{*1*}(**x-t**(x)) + *wg*_{*2*}(**x+t**(x)). The parameter *w* that may be called the color parameter, 0<=*w*<=1, controls the source of the color information: with a small value of w, the color is closer to the one in image *g*_{*1*}, and with a large value *w* the color information is closer to the one of image *g*_{*2*}.

As can be noticed, the shape and color parameters can be separately defined for each pixel of the intermediate picture. However, the values of the shape parameter c and the color parameter **w** can be preferably defined to be constant over the whole image, or they can be determined separately for each image area, e.g. an image block of 8-by-8 pixels.

After the normal interpolation for forming the intermediate picture the adjustment is done by comparing the images (in a case of encoding the original image and the interpolated image) or image areas (in an extreme case comparing individual pixels) created by using various parameter values to the desired image or image area. In the first phase, the candidates for the parameter values are selected using a coarse grid, and the parameter value pair that produces the best intermediate image is selected. Then new images are created using the parameter values (c, w) that are close to the best ones found in the previous step, and the new images are also compared to the desired image. These steps are repeated many times until the intermediate image is close enough to the desired image. This iteration can be done, for example, using a logarithm search.

For example, by changing the value of the shape parameters related to the motion vectors **28** and **27** in FIG. **2**, we can create any object that has a shape between the shapes illustrated in the original images **IMG. 21** and **IMG. 22.** The shape of the object **26** is one example of the intermediate shape of the shapes of objects **24** and **25.** In addition, we can select the color of the intermediate image to get any value between the colors of objects **24** and **25**. It should be noticed that the adjustment can also be made only for a part or parts of the intermediate image, for example, for the part that contains fast motion, and for example an area of 8 * 8 pixels. So, it is possible to divide the image into several blocks, and each block, i.e. part, can be formed independently from the other blocks. Due to this, there are a great number of variations for the image to be formed.

Furthermore, after the adjustment is done it is possible to use additional adjusting parameters, which correct either the pixel values of the intermediate image or the values of the motion vectors of the singular vector field. By using this kind of additional adjusting parameters we can bring the resulting image closer to the desired one.

So, the parameter values (c, w) used with the motion vectors, the associated parameters, contain motion and color information. When the intermediate picture is known beforehand, the parameter values used when creating the interpolated image can be calculated to the desired values using any suitable iteration method, such as a logarithm search. Also the adjusting parameter values can be calculated using any suitable iteration method.

For example, using a method of the logarithm search, a search step of the parameter values is decreased during the iteration process. If the valid values of the shape (c) and color (w) parameters are lying between the values -1 and 1, the initial search step can be, for example, ±0,5 around the initial guess (shape; color) = (0.0, 0.0). In the first step, a total of nine images are created, with the parameter values (0.0±d1; 0.0±d2) where d1 and d2 get values -0.5, 0.0, and +0.5, i.e., (-0.5; -0.5), (0.0; -0.5), (0.5; -0.5), (-0.5; 0.0), (0.0; 0.0), (0.5; 0.0), (-0.5; 0.5), (0.0; 0.5), and (0.5; 0.5). The next search step may be ±0,5/2 around the best values found thus far, e.g. if the best value of the previous step would be (0.5; 0.5), the next step would include the creation of the images with parameter values (0.5±d1; 0.5±d2), where d1 and d2 get values -0.25, 0.0, and +0.25; however the combination of d1 = 0.0 and d2 = 0.0 is excluded, because it has been already calculated during the previous step. This is continued until the distortion between the desired picture and the interpolated picture is within satisfactory limits or a number of predetermined iteration rounds have been performed. It should be noticed that there exists several different methods of the logarithm search. For instance, the distortion can be calculated using a direct error or a mean square error.

Also the adjusting parameter can be achieved in any of the ways described above, or any other convenient manner, the selection of which is a matter of technical choice to the person skilled in the art.

FIG. **3** illustrates an example of different possibilities when adjusting the parameters of the motion vectors for the desired image. The first picture **31** represents a circle, and the second picture **32** represents a triangle. The vertical axis describes values of the motion parameters, and the horizontal axis values of the color parameters. If linear interpolation is used when forming an intermediate picture, object **34** is achieved. However in this case, the color information of the pixels of the intermediate picture is desired to be the same as in the first picture **31**, i.e. zero. The motion information is desired to be the same as object **34** has, i.e. 0,5. Thus object **33** is the best image for representing the desired picture. Object **33** is achieved by changing the weight of the color parameter value. It should be noted, that non-linearity can be taken into account in both parameters: one describing color and the other one describing motion, ie. shape. If object **33** is still not good enough, the final adjustment can be made using the adjusting parameters.

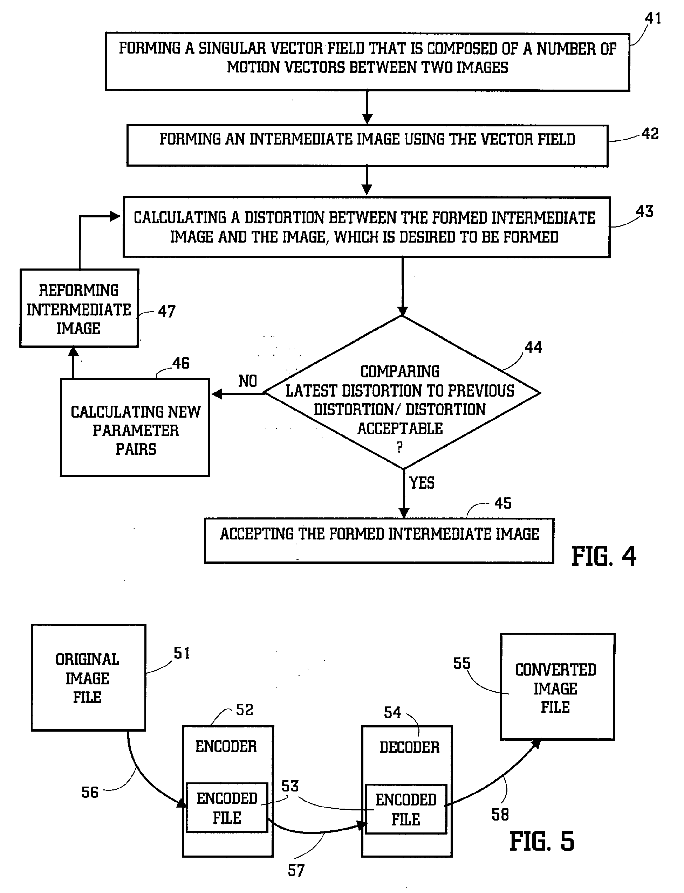

FIG. **4** illustrates an example of a flow chart representing the inventive method. First, a singular vector field (or any other vector field) must be formed **41** between two images. As mentioned, singular means that each motion vector in the vector field has points in both the images, which represent the point of the motion vector in an intermediate image, and the motion vectors do not cross between the original images.

Next, an intermediate image is formed using the vector field by interpolating **42** values of the parameter pair, i.e. values for the shape and color, in a level, i.e. timeline position, of the intermediate image. A distortion between the formed intermediate image and the image which is desired to be formed, is calculated **43**. A distortion can be the sum of errors of each pixel value or the sum of square errors of each pixel value, just to mention some ways. If the distortion is at an acceptable level **44**, the formed intermediate image is accepted **45**.

If the distortion is not acceptable **44**, new values of the parameter pair in the intermediate image are calculated **46**. The new values can be any values between the values in the original images. When the new parameter values have been calculated, the intermediate image is reformed **47**.

The calculation can be done in an iterative way, using for example a logarithm search, if the calculation must be repeated several times. In each round the latest parameter values are used for forming the latest picture, which is compared to the previously formed picture **44**. If the latest picture is better than the previous picture, the latest parameter values are better and they are selected to be initial values for the next round. In the opposite case, the previous parameter values are better and they remain as the initial values. When calculating the new parameters **46**, the range of new values around the latest initial values decreases in each round.

In a similar way, the additional adjusting parameters can be calculated, if the error is still too large after the iteration described above.

The inventive method can be used in any possible application, arrangement, and device, which needs image interpolation. For example, encoding and decoding video files is a very obvious environment to use the invention. In fact, the invention can be used in any digital image editing.

FIG. **5** shows an example of an encoder/decoder arrangement according to the invention. The original image file **51** is going to be encoded using the interpolation according to the invention. The image file can, for example, be a video file, which is composed of separate images, one after the other. The image file is inserted **56** into an encoder **52**, which uses the inventive interpolation. Using the interpolation, it is possible to decrease the size of the image file considerably. Let's say, for example, that every second separate image is going to be encoded using the inventive interpolation, and every second separate image is going to be retained (and if desired, encoded using another encoding technique).

The images maintained are used for creating singular vector fields between them. Next, the images to be encoded are interpolatad. In other words, the parameter values (and if necessary the values of the adjusting parameters in the intermediate image) used with the motion vectors in the vector fields contain the encoding information. Iteration is used so that the images to be encoded will be equal with the original pictures to within an acceptable accuracy. When the encoded pictures are acceptable, the encoded file **53** can be used as desired. It should be noticed that the less the original pictures are left and more pictures have been interpolated, the more the size of the image file is decreased in the encoding process. In other words, one vector field can be used for encoding several images. So the whole encoded image file contains primarily- encoded frames (encoded using a suitable encoding technique), data of the interpolated frames, and data of the values of the associated parameters.

The encoded image file is sent **57** to a decoder **54**, which uses the inventive interpolation for decoding, using the values of shape and color parameters (and if necessary the values of the additional adjusting parameters in the intermediate image). Often, the encoder and the decoder are at different places, and connected via the Internet. For example, the encoder can be in a server of a service provider and the decoder in a customer's terminal. An encoded file is far more efficient to be sent than an uncoded file. The decoder converts the encoded file back to the original (or almost) size using the parameters of the vector fields and substantially inverting the process described above. The converted image file **55** is delivered **58** from the decoder to a final application.

Although, the invention has been described in this text using only a few examples, it is obvious that the invention can be implemented in many different solutions. For example, error calculation can be specific either for each pixel or for a group of pixels (such as an 8*8 area wherein a mean error of pixels is going to be adjusted into an acceptable level). Thus the invention is not restricted to the above-mentioned examples, but the invention can used in any suitable implementation in the scope of the inventive ideas.

## Claims

1. A method for interpolating an image between a first and a second image, **characterized in that** the method comprises the steps of:
a) forming a vector field composed of a number of motion vectors between the first and second image, each motion vector associated to motion vector specific parameters,
b) forming an intermediate image by using the vector field in a way that values of the associated parameters of the motion vectors in a level of the intermediate image are interpolated,
c) calculating a distortion between the formed intermediate image and the image, which is desired to be formed,
d) if the distortion is not acceptable, calculating new parameter values , reforming the intermediate image, and repeating step c), and
e) if the distortion is acceptable, accepting the formed intermediate image to be the desired image.

2. A method according to claim 1, **characterized in that** the associated parameters of the motion vectors represent color and motion information.

3. A method according to claim 1, **characterized in that** the interpolation is made for at least one part of the image.

4. A method according to claim 2, **characterized in that** the interpolation is made for at least one part of the image.

5. A method according to claim 2, 3 or 4, **characterized in that** when forming the intermediate image, values of adjusting parameters are taken into account.

6. A method according to claim 1 or 5, **characterized in that** the distortion is a sum of errors between the formed intermediate image and the image which is desired to be formed.

7. A method according to claim 1 or 5, **characterized in that** the distortion is a sum of square errors between the formed intermediate image and the image, which is desired to be formed.

8. A method according to claim 1 or 5, **characterized in that** after step c) the latest distortion is compared to the previous distortion, and the associated parameter values of the motion vectors are selected to be initial values for the next calculation of new associated parameter values in a way that
the latest associated parameter values are selected if the latest distortion is smaller than the previous distortion and
the previous associated parameter values are selected if the previous distortion is smaller than the latest distortion.

9. A method according to claim 8, **characterized in that** in the next calculation of the new associated parameter values a range around the initial values, where the new parameter values are, is smaller than in the previous calculation.

10. A method according to claim 1 or 9, **characterized in that** more than one intermediate image is interpolated using the same vector field.

11. A method according to claim 1 or 9, **characterized in that** an image to be encoded is encoded using the associated parameter values.

12. A method according to claim 11, **characterized in that** the encoded image to be decoded is decoded using the associated parameter values.

13. A method according to claim 1 - 12, **characterized in that** the vector field is a singular vector field.

14. An encoder for encoding images, **characterized in that** the encoder comprises:
a) means for forming a vector field that comprises a number of motion vectors between a first and a second image, each motion vector associated to motion vector specific parameters,
b) means for forming an intermediate image by using the vector field in a way that values of the associated parameters of the motion vectors in a level of the intermediate image are interpolated,
c) means for calculating a distortion between the formed intermediate image and the image which is desired to be formed,
d) means for accepting the formed intermediate image to be the desired image if the distortion is acceptable, which is also the encoded image in the form of the parameters the motion vectors and the associated parameter values,
e) means for calculating new associated parameters of the motion vectors, and means for reforming the intermediate image and repeating the actions of means c) by transporting the reformed image to means c), if the distortion was not acceptable.

15. An encoder according to claim 14, **characterized in that** the means d) comprises:
f) means for comparing the latest distortion and the previous distortion,
g) means for selecting associated parameter values of the motion vectors to be initial values for means e) in a way that the latest associated parameter values are selected if the latest distortion is smaller than the previous distortion and the previous associated parameter values are selected if the previous distortion is smaller than the latest distortion.

16. An encoder according to claim 15, **characterized in that** the means f) comprises means for changing a range around the initial values, where the new parameter values are, in a range that is smaller than in the previous calculation.

17. A decoder for decoding images, **characterized in that** the decoder comprises:
h) means for forming a vector field that is composed of a number of motion vectors between a first and a second image, using predetermined information of the parameters of the motion vectors and associated parameter values,
i) means for forming an image using the vector field and the associated parameter values, the formed image being the decoded image.

18. A decoder according to claim 17, **characterized in that** the vector field is a singular vector field.
